**Europäisches Patentamt**

(19) **European Patent Office**

**Office européen des brevets**

(11) Publication number: **0 107 472**
**B1**

(12) **EUROPEAN PATENT SPECIFICATION**

(45) Date of publication of patent specification: **08.07.87**

(21) Application number: **83306319.1**

(22) Date of filing: **18.10.83**

(51) Int. Cl.⁴: **F 16 B 13/10**

(54) **Tubular member.**

(30) Priority: **27.10.82 GB 8230629**

(43) Date of publication of application:
**02.05.84 Bulletin 84/18**

(45) Publication of the grant of the patent:
**08.07.87 Bulletin 87/28**

(84) Designated Contracting States:
**AT BE CH DE FR GB IT LI LU NL SE**

(56) References cited:
**DE-A-2 836 347**
**DE-A-2 927 373**
**US-A-3 922 833**

(73) Proprietor: **The Rawlplug Company Limited**
**Rawlplug House London Road**
**Kingston-upon-Thames, Surrey KT2 6NR United**
**Kingdom (GB)**

(72) Inventor: **Wallace, Thomas Campbell**
**8 Ormonde Avenue**
**Glasgow Scotland (GB)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to a tubular member formed by a plurality of components, each of which components can be formed by casting or moulding.

Components of relatively complicated shape can be formed by die-casting metal or moulding plastics material, but if the mould includes sliding cores which project into the die or mould cavity and which must be slid outwardly prior to opening of the die or mould to enable the die or mould to be opened, the number of items which can be cast or moulded in each operation is severely limited. Thus, a die-casting die including sliding cores may be able to cast only six items per operation whereas a simple split, two-part die without side coring may be able to cast up to two hundred items in each operation.

It is will known to manufacture expansion bolts comprising a sleeve formed by a plurality of die-cast segments and to co-operate with a bolt which extends through the sleeve and engages a tapered nut such that tightening of the bolt pulls the nut into the sleeve to expand one end of the sleeve by spreading the segments apart, the segments being retained in the form of a sleeve by a crimped ferrule at one end and frequently also a circular spring ring adjacent the other end. While such expansion bolts have been generally satisfactory in operation, the assembly of the segments to form the sleeve and the securing thereof by means of the ferrule and spring ring are relatively expensive manufacturing operations.

US—A—3 922 833 describes a fastener comprising two members and a locking pin, the members each comprising a securing flange and a pair of axially spaced arch shaped portions extending from the flange and each extending circumferentially for more than 180°. By alternate engagement together of the arch shaped portions of the two members and insertion of the locking pin therein, the two members can be secured against separation.

DE—A—2 927 373 shows an expansion bolt with a tubular sleeve formed by two arch shaped members which have angled alternating projections and recesses at their edges, the members being engageable such that the projections of one member engage in the recesses of the other and vice versa, a cylindrical member inserted in the tubular sleeve being effective to secure the members in engagement.

According to the invention there is provided a tubular member comprising at least two components of substantially similar form wherein each component comprises a first portion forming a part of a sleeve and, spaced axially from said first portion, a further portion integral with said first portion and forming a further part of the sleeve, the components being so formed that by relative movement thereof, in a plane in which said longitudinal axis lies or in a plane substantially parallel thereto, the components can be juxtaposed together in interengaging relation so that the sleeve which they form is substantially complete, and the components being securable against separation by a member engaged in the sleeve or by co-operating profiles of the components, characterised in that said first portion and said further portion are offset with respect to one another around the longitudinal axis of the sleeve.

Each of the components is preferably so shaped that it can be cast or moulded in a simple two-part die or mould, that is to say a die or mould which does not include sliding cores.

Preferably, the sleeve is formed by only two components and said first portion and said further portion of each component are off-set about said longitudinal axis by substantially 180°. Thus, each of said first portion and said further portion may be substantially trough-shaped, that is to say semi-annular in form, and be joined together at their adjacent ends so as to be integral by a relatively narrow web of material. Securing of the components by providing co-operating profiles thereon may, for example, be effected by providing reverse tapers on abutting joint faces so that the components snap into the assembled position when moved relatively to one another in said plane.

Such components can, if desired, be completely identical.

When the components are to form tubular members which are to be the sleeves of expansion bolts, the components may be modified to suit their particular purpose. Thus, the junction between said first portion and said further portion of each component may be closer to one end of the component than to the other end; circumferentially extending joint faces between the pair of components may extend at an angle to the longitudinal axis of the sleeve; the faces of the components which form the bore of the sleeve may be configured, particularly to co-operate with angled faces of a nut; grooves, ribs or other variations in section may be incorporated to vary and control the particular locations at which bending or other distortion will occur when the components are stressed in use and to affect the grip which the sleeve will effect on the wall of a bore in which it is located in use; and edge portions of the components, adjacent that end of the sleeve at which the nut is to be provided, may be cut away so as to provide recesses to receive projections from the nut to prevent the nut from rotating with respect to the sleeve.

A pair of components can be formed secured together by integral temporary fixing webs and incorporating the parts of a nut and/or a bolt such that all the components of the expansion bolt are moulded integrally, the temporary fixing webs securing the components together and to the parts of the nut and/or the bolt being broken and the components thereafter assembled in their operative positions either by the manufacturer or by the user.

The junction between the first portion and the further portion of each component may be abrupt and not extend for any significant axial length of the sleeve or may be gradual such that there is an intermediate portion which does extend for a significant part of the axial length of the sleeve.

The application of tubular members according to the invention is by no means limited to expansion bolts. There may be many other applications which it is desired to form a tubular member out of simply mouled or cast components which can be engaged together by relative lateral movement and then secured against separating movement by inserting a member in the bore of the sleeve, by profiling the abutting joint faces or by other means.

The invention is diagrammatically illustrated by way of example in the accompanying drawings, in which:—

Figure 1 is an exploded view of an expansion bolt incorporating a tubular member according to the invention;

Figures 2, 3 and 4 are respectively a perspective view, a sectional view and an exploded perspective view of a second embodiment of a tubular member according to the invention formed as a sleeve for an expansion bolt;

Figure 5 is a perspective view of a tubular member according to a third embodiment of the invention formed as a sleeve for an expansion bolt and incorporating a nut in two parts;

Figures 6 and 7 are diagrammatic views showing formation of an expansion bolt from the article of Figure 5;

Figures 8 and 9 are respectively an elevation and an end view of the expansion bolt of Figures 5 to 7; and

Figure 10 is a perspective view of a tubular member according to a fourth embodiment of the invention, similar to Figure 5 but incorporating a bolt.

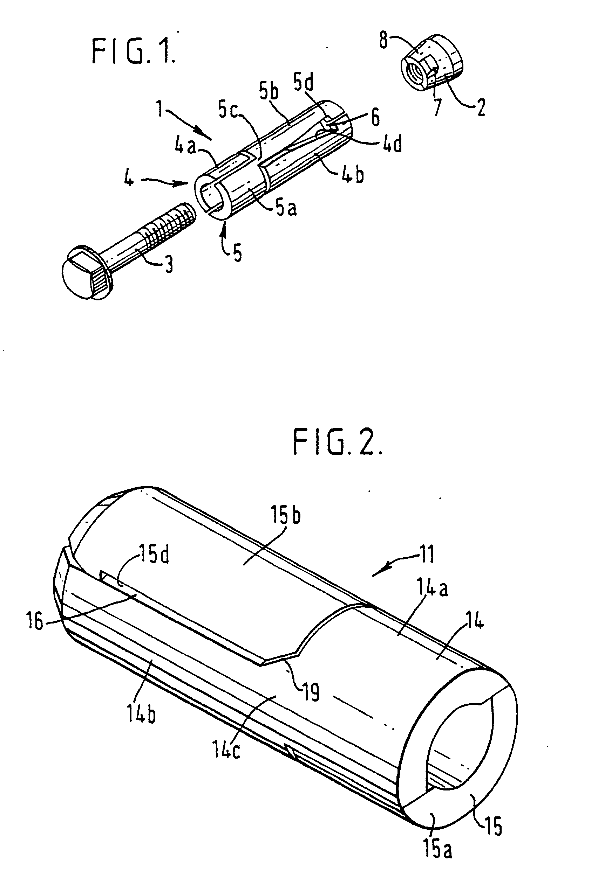

Referring to the drawings and firstly to Figure 1, an expansion bolt comprises a sleeve 1, a nut 2 and a bolt 3. The sleeve 1 is formed by two identical components 4 and 5. Each component 4, 5 comprises a first portion 4a, 5a and a second portion 4b, 5b. Each portion 4a, 5a, 4b, 5b is formed as a semi-annular shell and the portion 4a is integral with the portion 4b and the portion 5a with the portion 5b by means of a narrow connecting web, only one of which, 5c, can be seen in Figure 1. Each component 4, 5 can be moulded or cast in a simple opening and closing mould since there are no re-entrant portions and the components 4, 5 can be engaged together by sliding them relatively laterally in a plane in which lies the longitudinal axis of the sleeve 1 and in which lie longitudinally extending edges of one of the components 4, 5 which will, in the assembled condition, abut longitudinal edges of the other component. Due to the width of the connecting webs between the portions of the components, that is to say the web 5c, the plane in which longitudinally extending abutting edges of the portions 4b, 5b lie will be off-set about the axis of the sleeve from the plane in which the abutting longitudinal edges of the portions 4a, 5a lie but by allowing small clearances, the two components 4, 5 can readily be moved into engagement with one another to achieve the assembled condition.

Recesses 4d, 5d can be provided in the abutting longitudinal edges of the portions 4b, 5b to form an aperture 6 on each side of the sleeve 1, in which aperture 6 a respective lug 7 on the nut 2 can be received to prevent the nut 2 from falling out of the end of the sleeve 1. The bolt 3 passes through the sleeve 1 and once it has been engaged therein or once the nut 2 has been engaged in the bore of the sleeve 1, the components 4, 5 will be prevented from moving apart from the assembled condition. By screwing the bolt 3 into the nut 2, the free ends of the portions 4b, 5b can be spread apart by the action of a conical face 8 of the nut 2 whereby the end of the sleeve 1, which is innermost in a bore, for example in a concrete wall into which the expansion bolt is inserted, will be spread apart to grip the wall of the bore and prevent the sleeve 1 moving out of the bore.

Preferably, the components 4 and 5 are identical with one another. Their shape can permit relatively easy mechanical conveyance in a defined orientation, for example supported on an upstanding thin wall member which engages the inner end face of the portion 4a, 5a and is vibrated so that the components can be transferred in a defined orientation to an assembly means for mechanically effecting interengagement of the components and insertion of the nut 2 and, if desired, the bolt 3 also.

Thus, an expansion bolt, as shown in Figure 1, can have its sleeve 1 formed of components which can be cast or moulded in relatively simple moulds with subsequent transfer to assembly means and assembly there, all without requiring any manual handling of the components.

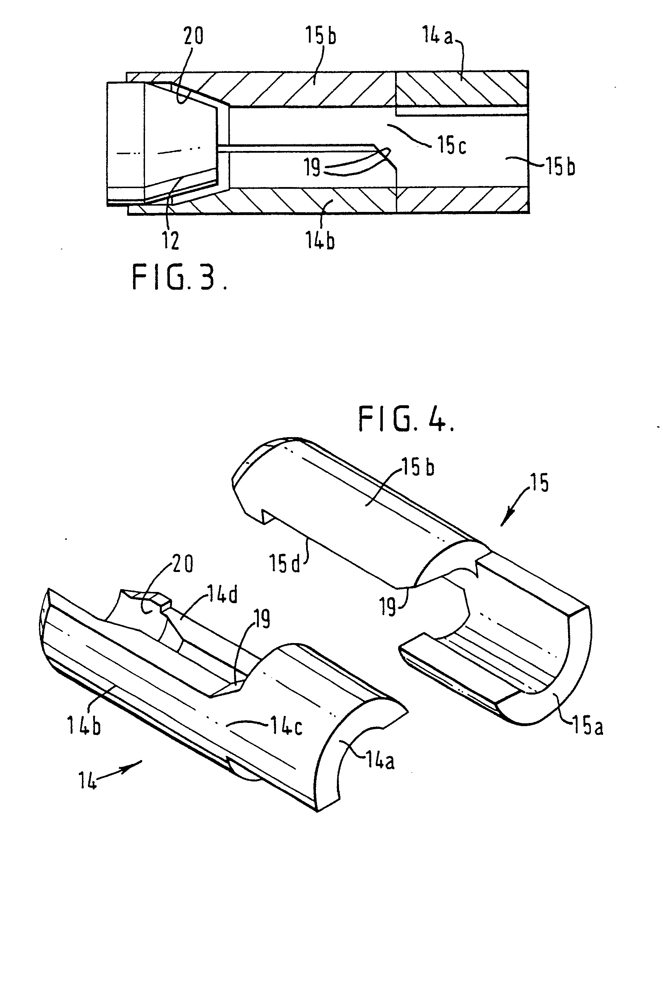

In the embodiment shown in Figures 2 to 4, the reference numerals allocated to parts correspond to those in Figure 1 but increased by 10. Thus, a sleeve 11 is formed by components 14 and 15 made up of portions 14a and 14b and 15a and 15b. The widths of the webs 14c, 15c joining the portions 14a, 14b and 15a, 15b respectively are extended partly due to an angled face 19, the longitudinal edges of the portions 14a, 15a are parallel but off-set so that relative movement of the components 14, 15 in the plane of the joint lines between the portions 14b, 15b is possible. The bore formed by the outer ends of the portions 14b, 15b is configured, as shown at 20 in Figure 3, to enable a part of the nut 12 to be received therein before a spreading effect is caused by the nut 12 acting on the portions 14b, 15b. Only one recess 14d, 15d is provided in each of the portions 14b, 15b to form a recess 16 for lugs (not shown) of the nut 12.

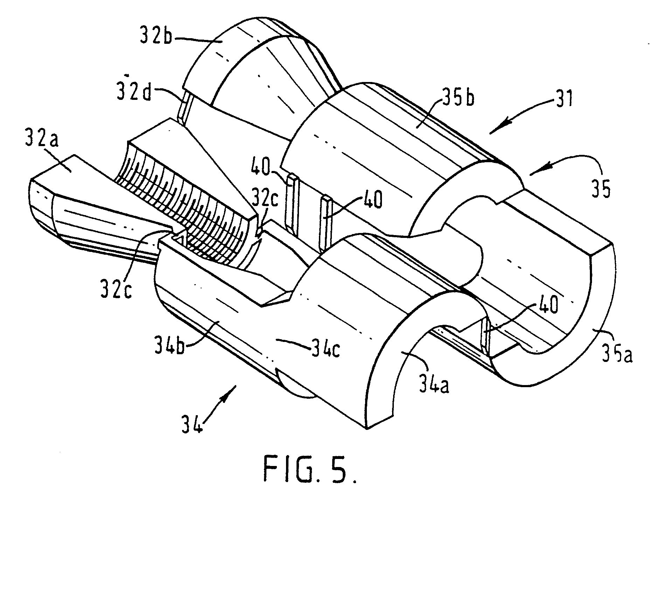

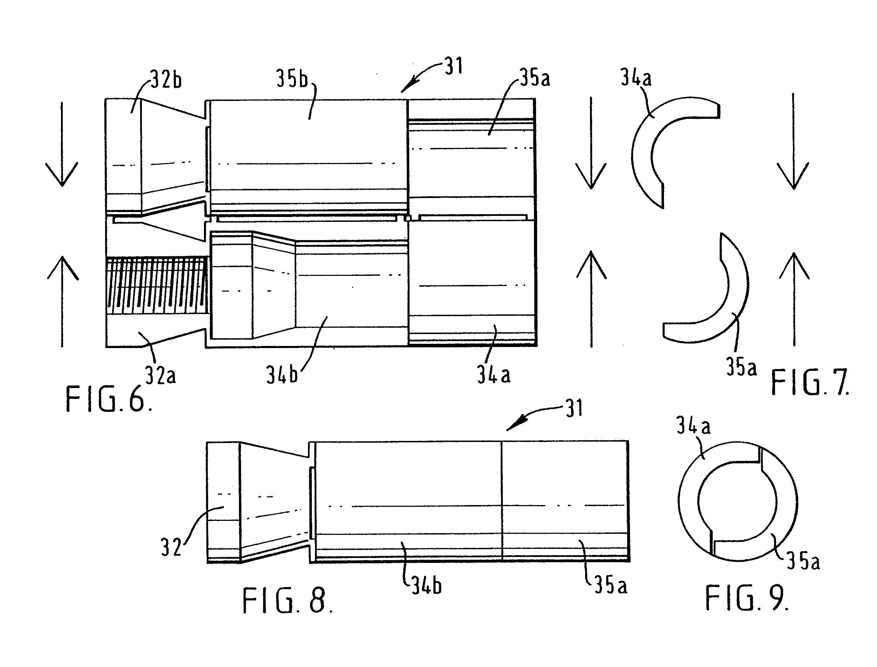

Referring to Figures 5 to 9, a sleeve 31 is to be formed by components 34, 35 which substantially correspond in shape to the components 14, 15 of Figures 2 to 4. However, the components 34, 35 are cast or moulded integral with one another with temporary connecting webs 40 joining them together. Also cast or moulded integral with the composite component 34, 35 are a pair of half nuts 32*a*, 32*b* joined to the components 34, 35 by temporary webs 32*c* and to one another by a temporary web 32*d* whereby the components of a sleeve for an expansion bolt together with a nut thereof can be moulded as an integral unit. The arrows in Figures 6 and 7 show the relative movements of the components of the sleeve 31 and nut 32 necessary to move the components from the condition of Figures 6 and 7 in which they are cast or moulded to the condition of Figures 8 and 9 in which they are assembled, ready for use. The temporary webs 32*c*, 32*d* and 40 can be removed by snapping them off if the sleeve 31 is formed of relatively brittle die-casting metal or pared off with a knife if the sleeve is formed of a thermoplastics material by moulding.

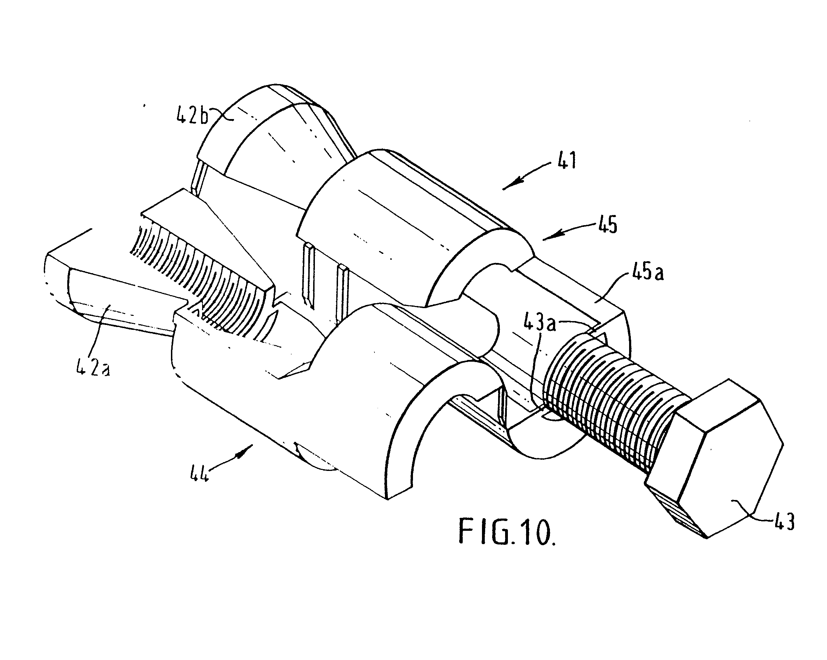

Referring to Figure 10, a sleeve 41 is shown which, in many respects, is similar to the sleeve 31 of Figure 5 but further includes a bolt 43 moulded integral with the sleeve 41 and the nut halves 42*a* and 42*b* and coupled to the portion 45*a* of the component 45 by temporary webs 43*a*. After movement of the components 44, 45 to the assembled position and movement of the nut 42, formed by the two halves 42*a*, 42*b*, into the bore of the sleeve 41, the bolt 43 can be driven in to break the temporary fixing webs 43*a* and then rotated to engage the thread of the bolt 43 in the thread of the nut 42. If desired, the expansion bolt of Figure 10 could be sold in the condition in which it is shown in Figure 10 with the movement to the assembled condition being effected by the user.

While the tubular member of the invention has been illustrated by way of example as the sleeve of an expansion bolt, it is by no means limited thereto. It is envisaged that the tubular member of the invention could form the barrel portions of hinges or could be formed of transparent material so that it could, for example, form the shield of a thermometer engaged in the bore thereof whereby the thermometer could be viewed but would be protected. Since the bore of the tubular member can be configured without difficulty, the tubular member, formed by the two components, could be used as a receptacle into which a pin could be pushed, the bore of the tubular member, for example, being serrated so that the pin could be pushed into the bore but could not subsequently be pulled out. The tubular member can have, in relation to its outside diameter and its length, considerably thicker walls than a correspondingly sized tubular member formed by rolling sheet material. While the tubular member of the invention has been shown with two portions for each component, it is clear that a greater number than two portions for each component could be provided if desired.

**Claims**

1. A tubular member comprising at least two components of substantially similar form wherein each component (4, 5; 14, 15; 34, 35; 44, 45) comprises a first portion (4*a*, 5*a*; 14*a*, 15*a*; 34*a*, 35*a*; 44*a*, 45*a*) forming a part of a sleeve (1; 11; 31; 41) and, spaced axially from said first portion, a further portion (4*b*, 5*b*; 14*b*, 15*b*; 34*b*, 35*b*; 44*b*, 45*b*) integral with said first portion and forming a further part of the sleeve (1; 11; 31; 41), the components (4, 5; 14, 15; 34, 35; 44, 45) being so formed that by relative movement thereof, in a plane in which said longitudinal axis lies or in a plane substantially parallel thereto, the components can be juxtaposed together in interengaging relation so that the sleeve which they form is substantially complete, and the components being securable against separation by a member (2, 3; 12; 32; 42, 43) engaged in the sleeve or by co-operating profiles of the components, characterised in that said first portion and said further portion are offset with respect to one another around the longitudinal axis of the sleeve.

2. A tubular member according to claim 1, characterised in that each of the components is so shaped that it can be cast or moulded in a simple two-part die or mould, that is to say a die or mould which does not include sliding cores.

3. A tubular member according to claim 1 or claim 2, caracterised in that the sleeve is formed by only two components and said first portion and said further portion of each component are off-set around said longitudinal axis by substantially 180°.

4. A tubular member according to claim 3, characterised in that said first portion and said further portion (4*b*, 5*b*) are each substantially trough-shaped, that is to say semi-annular in form, and are joined together at their adjacent ends so as to be integral by a relatively narrow web of material (5*c*; 14*c*, 15*c*; 34*c*).

5. A tubular member according to any one of claims 1 to 4, characterised in that the co-operating profiles of the components comprise reverse tapers on abutting joint faces so that the components snap into the assembled position when moved relatively to one another in said plane.

6. A tubular member according to any one of claims 1 to 5, in the form of a tubular member which is to be the sleeve of an expansion bolt, characterised in that the components are modified to suit their particular purpose by providing at least one of the features that the junction between said first portion and said further portion of each component is closer to one end of the component than to the other end; that circumferentially extending joint faces (19) between the pair of components (14, 15) extend at an angle to the longitudinal axis of the sleeve (11); that the faces (20) of the components which form the bore of the sleeve are configured, particularly to co-operate with angled faces of a nut (12); that grooves, ribs or other variations in section are incorporated to vary and control the particular locations at which bending or other distortion will occur when the components are stressed in use and to affect the grip which the sleeve will effect on the wall of a bore in which it is located in use; and that edge portions (4d, 5d; 15d) of the components, adjacent that end of the sleeve at which the nut (2; 12) is to be provided, are cutaway so as to provide recesses (6; 16) to receive projections (7) from the nut to prevent the nut from rotating with respect to the sleeve.

7. A tubular member according to any one of the preceding claims, characterised in that a pair of the components are formed secured together by integral temporary fixing webs (40) and incorporating the parts of a nut (32a, 32b; 42a, 42b) and/or a bolt (43) such that all the components of the expansion bolt are moulded integrally, the temporary fixing webs (40, 32c, 32d; 43a) securing the components together and to the parts of the nut and/or the bolt being broken and the components thereafter assembled in their operative positions either by the manufacturer or by the user.

8. A tubular member according to any one of claims 1 to 5, characterised in that the junction between the first portion and the further portion of each component is abrupt and does not extend for any significant axial length along the sleeve (1).

9. A tubular member according to any one of claims 1 to 5, characterised in that the junction between the first portion and the further portion of each component is gradual such that there is an intermediate portion (14c, 15c; 34c which does extend for a significant part of the axial length of the sleeve (11; 31; 41).

**Patentansprüche**

1. Rohrförmiges Teil, welches wenigstens zwei Komponenten von im wesentlichen ähnlicher Form aufweist, wobei jede Komponente (4, 5; 14, 15; 34, 35; 44, 45) ein erstes Teilstück (4a, 5a; 14a, 15a; 34a, 35a; 44a, 45a) aufweist, welches einen Teil einer Hülse (1; 11; 31; 41) bildet, und in axialem Abstand von dem ersten Teilstück ein weiteres Teilstück (4b, 5b; 14b, 15b; 34b, 35b; 44b, 45b), welches einstückig mit dem ersten Teilstück ist und einen weiteren Teil der Hülse (1; 11; 31; 41) bildet, wobei die Komponenten (4, 5; 14, 15; 34, 35; 44, 45) so geformt sind, daß durch eine Relativbewegung von ihnen in einer Ebene, in welcher die longitudinale Achse liegt, oder in einer Ebene im wesentlichen parallel dazu die Komponenten zusammen einander gegenüber in Eingriff miteinander angeordnet werden können, so daß die Hülse, welche sie bilden, im wesentlichen vollständig ist, und wobei die Komponenten gegen das Abtrennen durch ein Teil (2, 3; 12; 32; 42, 43), welches in die Hülse eingreift, oder durch zusammenwirkende Profile der Komponenten sicherbar sind, dadurch gekennzeichnet, daß das erste Teilstück und das weitere Teilstück relativ zueinander um die longitudinale Achse der Hülse versetzt sind.

2. Rohrförmiges Teil nach Anspruch 1, dadurch gekennzeichnet, daß jede der Komponenten so geformt ist, daß sie in einer einfachen, zweiteiligen Form gegossen oder geformt werden kann, d.h. in einer Form, welche keine Kerne bzw. Gleitkerne enthält.

3. Rohrförmiges Teil nach Anspruch 1 oder 2, dadurch gekennzeichnet, daß die Hülse von nur zwei Komponenten gebildet wird und daß das erste Teilstück und das weitere Teilstück jeder Komponente um die longitudinale Achse um im wesentlichen 180° versetzt sind.

4. Rohrförmiges Teil nach Anspruch 3, dadurch gekennzeichnet, daß das erste Teilstück und das weitere Teilstück (4b, 5b) jeweils im wesentlichen trogförmig sind, d.h. von halb-ringförmiger Form, und an ihren benachbarten Enden zusammenhängen, so daß sie durch einen relativ engen Materialsteg (5c; 14c, 15c; 34c) einstückig sind.

5. Rohrförmiges Teil nach einem der Ansprüche 1 bis 4, dadurch gekennzeichnet, daß die zusammenwirkenden Profile der Komponenten an aneinanderliegenden Verbindungsflächen rückwärtige Einziehungen aufweisen, so daß die Komponenten in die zusammengesetzte Position einrasten, wenn sie in der erwähnten Ebene relativ zueinander bewegt werden.

6. Rohrförmiges Teil nach einem der Ansprüche 1 bis 5 in der Form eines rohrförmigen Teiles, welches die Hülse eines Dehnungsbolzens ist, dadurch gekennzeichnet, daß die Komponenten an ihren besonderen Zweck angepaßt sind, indem zumindest eines der Merkmale vorgesehen ist, daß die Verbindung zwischen dem ersten Teilstück und dem weiteren Teilstück jeder Komponente dichter an einem Ende der Komponente als an dem anderen liegt; daß sich in Umfangsrichtung erstreckende Verbindungsflächen (19) zwischen dem Paar von Komponenten (14, 15) sich unter einem Winkel zu der longitudinalen Achse der Hülse (11) erstrecken; daß die Flächen (20) der Komponenten, welche die Durchgangsöffnung bzw. Bohrung der Hülse bilden, so ausgestaltet sind, daß sie insbesondere mit den winkeligen Flächen einer Mutter (12) zusammenwirken; daß Rillen, Rippen oder andere Querschnittsvarianten eingearbeitet sind, um die Stellen zu variieren und zu steuern, bei welchen eine Verbiegung oder eine andere Verformung auftritt, wenn die Komponenten im Gebrauch belastet werden, und um den Halt zu beeinflussen, welchen die Hülse an der Wand einer Bohrung bewirkt, in welcher sie bei Gebrauch angeordnet ist; und daß Kantenbereiche (4d, 5d; 15d) der Komponenten, welche an das Ende der Hülse anschließen, an welchem die Mutter (2; 12) vorgesehen werden soll, herausgeschnitten sind, so daß Aussparungen (6; 16) vorgesehen sind, um Vorsprünge (7) der Mutter aufzunehmen, um eine Drehung der Mutter relativ zu der Hülse zu verhindern.

7. Rohrförmiges Teil nach einem der vorstehenden Ansprüche, dadurch gekennzeichnet, daß ein Paar von Komponenten zusammen gesichert ausgebildet werden durch einstückige provisorische Befestigungsstege (40) und unter Einschluß der Teile einer Mutter (32a, 32b; 42a, 42b) und/oder eines Bolzens (43), derart, daß alle Komponenten des Dehnungsbolzens einstückig geformt werden, wobei die provisorischen Befestigungsstege (40, 32c, 32d; 43a) die Komponenten miteinander und mit den Teilen der Mutter und/oder des Bolzens zusammenhalten, welche abgebrochen werden, woraufhin die Komponenten in ihrer Funktionsstellung entweder durch den Hersteller oder durch den Benutzer zusammengesetzt werden.

8. Rohrförmiges Teil nach einem der Ansprüche 1 bis 5, dadurch gekennzeichnet, daß der Übergang zwischen dem ersten Teilstück und dem weiteren Teilstück jeder Komponente abrupt ist und sich nicht über eine nennenswerte Länge entlang der Hülse (1) erstreckt.

9. Rohrförmiges Teil nach einem der Ansprüche 1 bis 5, dadurch gekennzeichnet, daß der Übergang zwischen dem ersten Teilstück und dem weiteren Teilstück jeder Komponente derart allmählich ist, daß es ein Übergangsteil (14c, 15c; 34c) gibt, welches sich über einen deutlichen Teil der axialen Länge der Hülse (11; 31; 41) erstreckt.

**Revendications**

1. Pièce tubulaire comprenant au moins deux éléments sensiblement de même forme dans laquelle chaque élément (4, 5; 14, 15; 34, 35; 44, 45) comprend une première partie (4a, 5a; 14a, 15a; 34a, 35a; 44a, 45a) constituant une pièce d'un manchon (1; 11; 31; 41) et une autre partie (4b, 5b; 14b, 15b; 34b, 35b; 44b, 45b), axialement espacée de ladite première partie, solidaire de ladite première partie et constituant une autre partie du manchon (1; 11; 31; 41), les éléments (4, 5; 14, 15; 34, 35; 44, 45) étant façonnés en sorte qu'en les déplaçant l'un par rapport à l'autre, dans un plan dans lequel s'étend ledit axe longitudinal ou dans un plan sensiblement parallèle à celui-ci, on puisse juxtaposer les éléments l'un à l'autre en relation d'engagement l'un dans l'autre de façon que le manchon qu'ils forment soit sensiblement complet, et la séparation des éléments pouvant être interdite par une pièce (2, 3; 12; 32; 42, 43) engagée dans le manchon ou par des profils coopérants des éléments, caractérisée en ce que ladite première partie et ladite autre partie sont décalées l'une par rapport à l'autre autour de l'axe longitudinal du manchon.

2. Pièce tubulaire selon la revendication 1, caractérisée en ce que chacun des éléments est configuré en sorte de pouvoir être coulé ou moulé dans une coquille ou dans un moule en deux pièces simples, c'est-à-dire une coquille ou un moule qui ne comporte pas de noyaux coulissants.

3. Pièce tubulaire selon la revendication 1 ou la revendication 2, caractérisée en ce que le manchon est formé seulement de deux éléments et lesdites première partie et autre partie de chaque élément sont décalées sensiblement de 180° autour dudit axe longitudinal.

4. Pièce tubulaire selon la revendication 3 caractérisée en ce que ladite première partie et ladite autre partie (4b, 5b) sont toutes deux sensiblement en forme de gouttière, c'est-à-dire de forme semi-annulaire, et sont réunies l'une à l'autre à leurs extrémités adjacentes de façon à être solidaires par une bande de matériau relativement étroite (5c; 14c; 15c; 34c).

5. Pièce tubulaire selon l'une quelconque des revendications 1 à 4, caractérisée en ce que les profils coopérants des éléments sont des conicités inverses prévues sur des faces de joint à réunir de sorte que les éléments prennent par emboîtement la position d'assemblage lorsqu'on les déplace l'un par rapport à l'autre dans ledit plan.

6. Pièce tubulaire selon l'une quelconque des revendications 1 à 5, sous la forme d'une pièce tubulaire destinée à être le manchon d'un bouchon expansible, caractérisée en ce qu'on modifie les éléments pour les adapter à leur usage particulier en prévoyant l'une au moins des caractéristiques résidant en ce que la jonction entre ladite première partie et ladite autre partie de chaque élément est plus proche d'une extrémité de l'élément que de l'autre extrémité; des faces s'étendant circonférentiellement (19) de joint entre les deux éléments (14, 15) sont inclinées sur l'axe longitudinal du manchon (11); les faces (20) des éléments qui définissent l'alésage du manchon sont configurées particulièrement pour coopérer avec des facettes inclinées d'un écrou (12); des gorges, nervures ou autres variations de section sont prévues pour faire varier et régler les endroits particuliers auxquels des déformations par flexion ou autres apparaissent quand les éléments sont sous contrainte en service et pour affecter la prise que le manchon exerce sur la paroi d'un alésage dans lequel il est placé en service; et des parties marginales (4d, 5d; 15d) des éléments, voisines de l'extrémité du manchon à laquelle l'écrou (2; 12) est à prévoir, sont échancrées pour ménager des évidements (6; 16) destinés à recevoir des saillies (7) de l'écrou pour empêcher l'écrou de tourner par rapport au manchon.

7. Pièce tubulaire selon l'une quelconque des revendications précédentes, caractérisée en ce qu'on façonne une paire des éléments fixés l'un à l'autre par des bandes de fixation temporaire intégrantes (40) et comportant les parties d'un écrou (32a, 32b; 42a, 42b) et/ou d'un boulon (43) de sorte que tous les éléments du boulon expansibles sont moulés d'un seul tenant, les bandes de fixation temporaire (40, 32c, 32d; 43a) fixant les éléments l'un à l'autre et aux parties de l'écrou et/ou du boulon étant rompus et les éléments assemblés ensuite dans leurs positions actives soit par le fabricant soit par l'utilisateur.

8. Pièce tubulaire selon l'une quelconque des revendications 1 à 5, caractérisée en ce que la jonction entre la première partie et l'autre partie de chaque élément est abrupte et ne s'étend pas sur une longueur axiale notable le long du manchon (1).

9. Pièce tubulaire selon l'une quelconque des revendications 1 à 5, caractérisée en ce que la jonction entre la première partie et l'autre partie de chaque élément est progressive de sorte qu'il existe une partie intermédiaire (14c, 15c; 34c) qui s'étend bel et bien sur une partie notable de la longueur axiale du manchon (11; 31; 41).

FIG.1.

FIG.2.

1

20   15 b   14 a

15 c

19

15 b

12   14 b

# FIG. 3.

# FIG. 4.

15 b

15

15 d

19

20   14 d

19

15 a

14 b   14 c

14   14 a

FIG. 5.

FIG.6.

FIG.7.

FIG.8.

FIG.9.

FIG.10.